# EUROPEAN PATENT SPECIFICATION

(11) **EP 2 690 727 B1**
(45) Date of publication and mention of the grant of the patent: **21.02.2018**
(21) Application number: 13003579.3
(22) Date of filing: 16.07.2013
(51) Int. Cl.: H02G 3/08

(54) **Device for the passage of cables and pipes, for electrical applications and the like**
Vorrichtung zur Durchführung von Kabeln und Rohren für elektrische Anwendungen und dergleichen
Dispositif pour le passage de câbles et de tuyaux, pour des applications électriques et analogues

(30) Priority: 26.07.2012 IT MI20121311
(43) Date of publication of application: 29.01.2014
(73) Proprietor: GEWISS S.p.A., 24069 Cenate Sotto (Bergamo) (IT)
(72) Inventor: Bosatelli, Domenico, 24069 Cenate Sotto (Bergamo) (IT)
(74) Representative: Forattini, Amelia

(56) References cited:
- EP-A1- 0 041 582
- EP-A1- 1 489 713
- EP-A1- 1 744 425
- EP-A2- 1 030 425
- WO-A1-2012/074443
- US-A- 4 041 241

## Description

The present invention relates to a device for the passage of cables and pipes, for electrical applications and the like.

As is known, a cable grommet is a device used to ensure the degree of protection of a container when one wishes to insert cables or pipes in said container.

Cable grommets are typically used to protect the passage holes of junction boxes.

A conventional cable grommet is generally constituted by a circular body that is provided with multiple planes, in which each plane determines a cutting region, which allows the access of the corresponding cable or pipe.

Generally, cutting is performed by means of a cutter both for the cable and for the pipes.

One problem of cable grommets of such type is that the planes have a considerable thickness and therefore protrude considerably with respect to the external surface of the box.

This geometrical shape and the material used are such that seal resistance limitations are evident in the vicinity of the region for coupling to the box when the test finger test according to the IEC 60670-1 and IEC 60670-22 standards is performed.

Other types of cable grommet are known which have a flatter shape and are provided with a series of concentric annular recesses that form cutting regions for the insertion of cables or pipes of different diameter.

This provision allows quick insertion of the cable without cutting any part of the cable grommet at least for some diameters, for example from 4 to 14 mm, while cutting with a cutter is provided for other diameters.

Typically, these cable grommets are provided with internal lips adapted to contain cables and pipes of different dimensions.

Furthermore, in order to ensure tightness, they have slightly larger coupling diameters than the diameter of the box.

WO2012074443 and EP1489713 disclose a grommet having a stopper of circular contour equipped externally with a clamping groove and internally with a passage for a cable. Lips project into the passage and apply elastic force against the cable. The stopper has a plane surface that is opposed against an external face of a wall that is situated around an opening. The face has concentric annular sealing ribs that are placed against the external face.

The aim of the present invention is to provide a device for the passage of cables and pipes that overcomes the drawbacks of the cited prior art.

Within the scope of this aim, an object of the invention is to provide a device that allows rapid insertion of a cable.

Another object of the invention is to provide a device for the passage of cables and pipes that is capable of overcoming the test finger test, according to the IEC 60670-1 and IEC 60670-22 standards.

Another object is to provide a device for the passage of cables and pipes that has a limited space occupation and does not protrude excessively from the surface of the device to which it is applied.

Another object of the present invention is to provide a device which, by virtue of its particular constructive characteristics, is capable of giving the greatest assurances of reliability and safety in use.

This aim and these and other objects that will become better apparent hereinafter are achieved by a device for the passage of cables and pipes, for electrical applications and the like.

Further characteristics and advantages will become better apparent from the description of the device according to the invention, illustrated by way of non-limiting example in the accompanying drawings, wherein:
Figure 1 is a side view, in longitudinal cross-section, of the device according to the present invention and of the end of a cable to be inserted;
Figure 2 is a front perspective view of the device;
Figure 3 is a perspective view of the rear part of the device;
Figure 4 is a side view, in longitudinal cross-section, of the device and of the end of a cable to be inserted, according to a further aspect of the present invention.

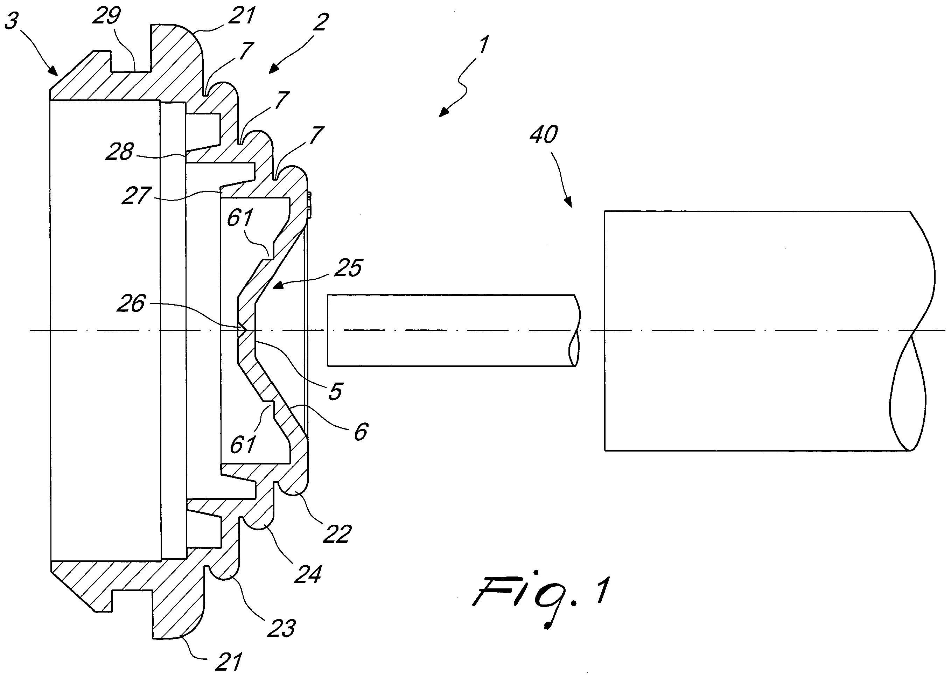

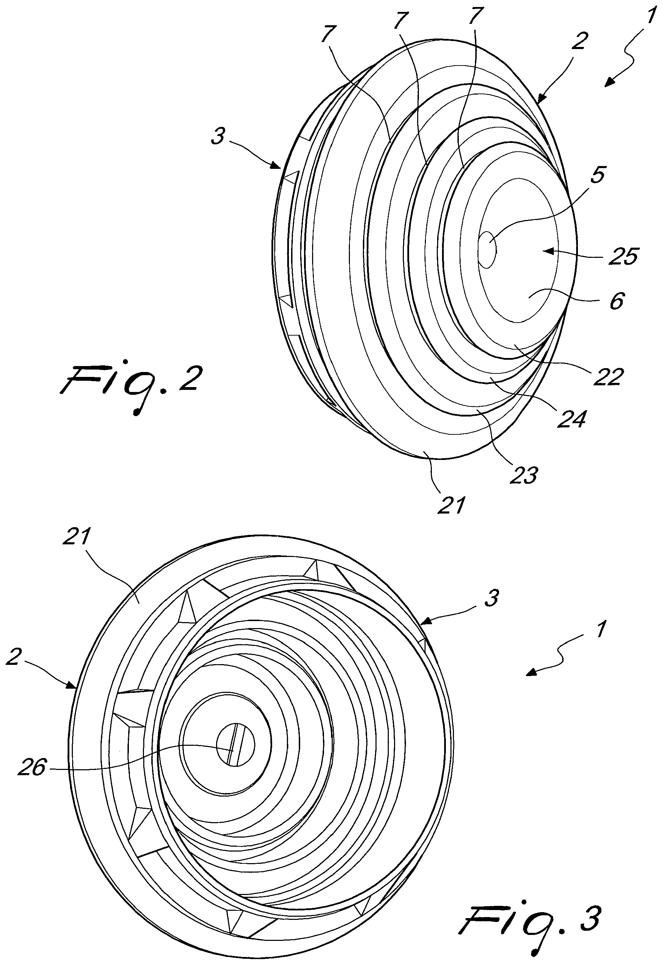

With reference to Figures 1-3, the device according to the invention, generally designated by the reference numeral 1, comprises a plurality of disk-like members, generally designated by the reference numeral 2, having a progressively smaller diameter with respect to each other and provided monolithically together with a shank 3.

The disk-like members 2 have at least a first base member 21, having a larger diameter, and an end member 22 having a smaller diameter.

One or more intermediate members can be arranged between the first base member 21 and the end member 22.

The disk-like members are separated externally from each other by radial slots 7.

In the illustrated example, there are two intermediate members: a first intermediate member 23 and a second intermediate member 24.

The end member 22 has a substantially frustum-shaped concave region 25, constituted by a flat circular region 5 that is blended with an inclined wall 6.

The concave region 25 has at least two pre-fracture members.

A first pre-fracture member is constituted by a pre-fracture recess 26 which has a triangular cross-section and is provided in the flat circular region in a central position.

Preferably, the pre-fracture recess 26 is shorter than the diameter of the minimum cable provided for insertion.

A second pre-fracture member is constituted by an annular notch 61 formed in the internal part of the inclined wall 6.

Inside the device, at the end member 22 and at one or more of the intermediate members 23 and 24, there are annular flaps, designated respectively by the reference numerals 27 and 28, which are adapted to contain cables and pipes having different diameters.

The shank 3 has an annular recess 29 which is adjacent to the first base member 21 and is adapted to engage the edge of the hole of the structure to which the device is applied.

In the first base member 21, which is adjacent to the shank 3 of the device, it is possible to provide an annular member made of rigid material, as described hereinafter.

The present device has been studied in particular to prearrange the rapid insertion of cables, designated schematically by the reference numeral 40 in Figure 1.

Another characteristic of the present device is that it withstands the test finger test, according to IEC 60670-1 and IEC 60670-22, which prescribes that it must be impossible for a foreign object to enter the enclosure, by applying a preset force, by moving or displacing from its seat the cable grommet.

Preferably, cable entry is provided with the direct insertion of cables having diameters from 4 to 14 mm. The concave region 25 is recessed within the internal part of the cable grommet, to allow the insertion of cables of any diameter within the range 4-14 mm.

This concave region has two pre-fracture members: the first pre-fracture member 26 for cables ranging from 4 to 6 mm, while the second pre-fracture member 61 is for cables from 7 to 14 mm.

In particular, the pre-fracture recess 26 of the flat circular region 5 is preset to tear under the thrust of a cable with a diameter between 4 and 6 mm.

The annular notch 61 of the inclined wall 6 is preset to tear by inserting a cable with a diameter included between 7 and 14 mm.

The entry of the pipes is provided for the diameters 16-20-25 mm.

In order to insert a pipe, the appropriate disk-like member 22, 23, 24 is cut by acting with a cutter in the radial slot 7 that separates various disk-like elements.

In order to achieve the IP55 seal between the cable grommet and the container, the coupling diameter of the cable grommet is increased by 0.2-0.3 mm with respect to the hole of the container.

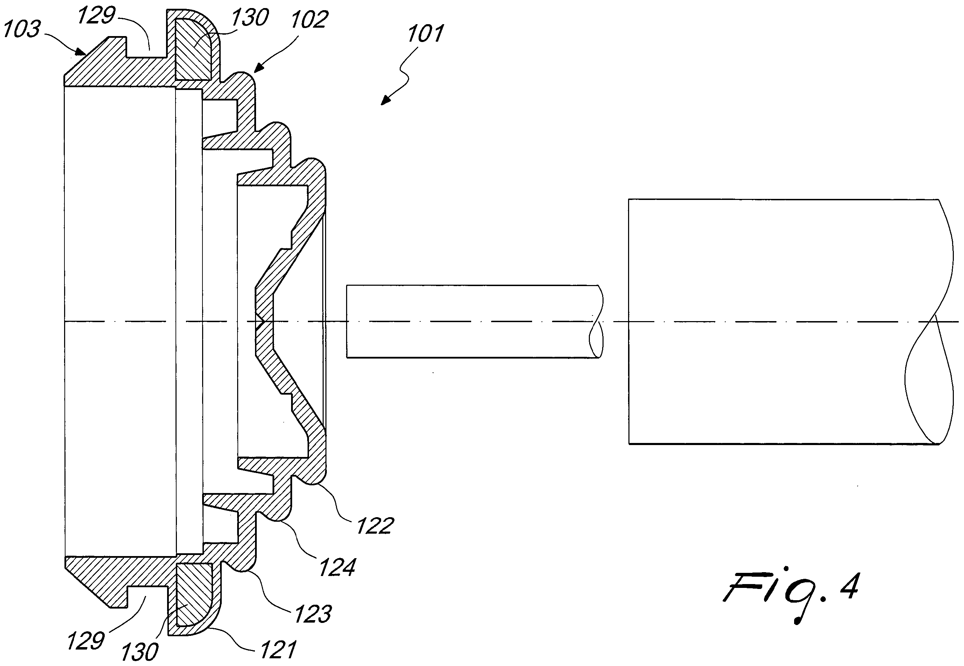

With reference to Figure 4, the device according to the invention, generally designated by the reference numeral 101, comprises a plurality of disk-like members that have progressively smaller diameters with respect to each other, are generally designated by the reference numeral 102 and are provided monolithically together with a shank 103.

The disk like members 102 have at least one first base member 121 that has a larger diameter and an end member 122 that has a smaller diameter.

One or more intermediate members can be arranged between the first base 121 and the end member 122.

In the illustrated example there are two intermediate members: a first intermediate member 123 and a second intermediate member 124.

The shank 103 has an annular recess 129 that is adjacent to the first base member 121 and is adapted to engage the rim of the hole of the structure to which the device is applied.

According to the present invention, in the first base member 121, adjacent to the shank 103 of the device, there is an annular member 130 made of a rigid material.

The annular member 130, preferably made of a rigid plastic material, is embedded in the first base member 121, preferably made of a soft material, during molding, becoming monolithic.

The annular member 130 embedded in the first base member 121 gives the device according to the present invention a particular resistance to the penetration of a foreign object.

The present device has been studied to meet the requirements dictated by the EN 60670 standard, which prescribes that it must be impossible for a foreign object to enter the enclosure, by applying a preset force, displacing or extracting the cable grommet from its seat.

In practice it has been found that the invention achieves the intended aim and objects, since a device for the passage of cables and pipes for electrical applications and the like has been provided that allows the rapid entry of cables and pipes and is also capable of withstanding the test finger test according to the IEC 60670-1 and IEC 60670-22 standards.

The better seal is also an assurance that the degree of protection is maintained but also allows to withstand the deformation stresses caused for example by jets of water produced by the lances used for cleaning, for example, walls or internal spaces, where the boxes might be located.

The superior performance of the present invention furthermore ensures a higher resistance to any accidental impacts, for example stones on the road displaced by passing vehicles or vandalism that might occur on the box in particular in the region of the cable grommet.

A further advantage of the present device is due to the rigid annular member 130, which, being embedded in the soft material during molding, becoming monolithic therewith, provides a reinforcement that ensures a greater resistance to the test finger, indeed at the lower annular member for coupling to the box.

The materials used, as well as the dimensions, may of course be any according to the requirements and the state of the art.

## Claims

1. A device for the passage of cables and pipes, for electrical applications and the like, comprising a plurality of disk-like members **(2, 102)** having a progressively smaller diameter with respect to each other and provided monolithically together with a shank **(3, 103);** said disk-like members compris**ing** at least one first base member **(21, 121**), having a larger diameter, and an end member **(22, 122),** having a smaller diameter; said end member **(22, 122)** having a substantially frustum-shaped concave region **(25)** constituted by a substantially flat circular region **(5)** connected to an inclined wall **(6)**; said device being **characterized in that** said end member **(22, 122)** has a pre-fracture means constituted by at least one recess **(26)**, having a substantially triangular cross-section, which is formed on the inner side of said end member **(22, 122);** said said recess **(26)** being formed in said substantially flat circular region **(5)** in a central position.

2. The device according to claim **1**, **characterized in that** said pre-fracture means comprises an annular notch **(61)** formed in the inner part of said inclined wall **(6)**.

3. The device according to claim 1, **characterized in that** it comprises an annular member **(130)** made of substantially rigid material that is embedded in said first base member **(121).**

4. The device according to claim 1, **characterized in that** it comprises one or more intermediate members **(23, 24, 123, 124)** that are arranged between said first base member **(21, 121)** and said end member **(22, 122).**

5. The device according to one or more of the preceding claims, **characterized in that** inside the device, at the end member **(22, 122)** and at one or more intermediate members **(23, 24, 123, 124),** there are annular flaps **(27, 28)** adapted to contain cables and pipes of different diameters.

6. The device according to one or more of the preceding claims, **characterized in that** said shank **(3, 103)** has an annular recess **(29, 129),** which is adjacent to said base member **(21, 121)** and is adapted to engage the rim of the hole of the structure to which the device is applied; said annular recess **(29, 129)** of said shank **(3, 103)** having a coupling diameter that is increased by 0.2-0.3 mm with respect to the hole of the structure to which said device is applied.

## Patentansprüche

1. Eine Vorrichtung für die Durchleitung von Kabeln und Rohren, für elektrische Anwendungen und dergleichen, die eine Vielzahl scheibenartiger Glieder (2, 102) mit zunehmend kleinerem Durchmesser zueinander und monolithisch gemeinsam mit einem Schaft (3, 103) bereitgestellt sind; wobei die scheibenartigen Glieder mindestens ein erstes Basisglied (21, 121) mit größerem Durchmesser und ein Endglied (22, 122) mit kleinerem Durchmesser umfassen; wobei das Endglied (22, 122) einen im Wesentlichen kegelstumpfförmigen konkaven Bereich (25) hat, der aus einem im Wesentlichen flachen kreisförmigen Bereich (5) besteht, verbunden mit einer schrägen Wand (6); wobei die Vorrichtung **dadurch gekennzeichnet ist, dass** das Endglied (22, 122) ein Vorbruchmittel hat, bestehend aus mindestens einer Vertiefung (26), mit im Wesentlichen dreieckigem Querschnitt, die an der Innenseite des Endgliedes (22, 122) geformt ist; wobei die Vertiefung (26) in dem im Wesentlichen flachen kreisförmigen Bereich (5) in zentraler Position geformt ist.

2. Die Vorrichtung gemäß Anspruch 1, **dadurch gekennzeichnet, dass** das Vorbruchmittel eine Ringnut (61) umfasst, die im inneren Teil der schrägen Wand (6) geformt ist.

3. Die Vorrichtung gemäß Anspruch 1, **dadurch gekennzeichnet, dass** sie ein ringförmiges Glied (130) aus im Wesentlichen festem Material umfasst, das in das erste Basisglied (121) eingebettet ist.

4. Die Vorrichtung gemäß Anspruch 1, **dadurch gekennzeichnet, dass** sie ein oder mehrere intermediäre Glieder (23, 24, 123, 124) umfasst, die zwischen dem ersten Basisglied (21, 121) und dem Endglied (22, 122) angeordnet sind.

5. Die Vorrichtung gemäß einem oder mehreren der obigen Ansprüche, **dadurch gekennzeichnet, dass** sich in der Vorrichtung, am Endglied (22, 122) und an einem oder mehreren intermediären Gliedern (23, 24, 123, 124), Ringklappen (27, 28) befinden, die ausgebildet sind, um Kabel und Rohre mit verschiedenen Durchmessern aufzunehmen.

6. Die Vorrichtung gemäß einem oder mehreren der obigen Ansprüche, **dadurch gekennzeichnet, dass** der Schaft (3, 103) eine ringförmige Vertiefung (29, 129) hat, die an das Basisglied (21, 121) angrenzt und ausgebildet ist, um in Eingriff mit dem Rand des Lochs der Struktur zu stehen, an welcher die Vorrichtung angebracht wird; wobei die ringförmige Vertiefung (29, 129) des Schafts (3, 103) einen Kopplungsdurchmesser hat, der um 0,2-0,3mm im Verhältnis zu dem Loch der Struktur vergrößert ist, an welcher die Vorrichtung angebracht wird.

## Revendications

1. Dispositif pour le passage de câbles et tuyaux, pour des applications électriques et similaires, comprenant une pluralité d'éléments discoïdes (2, 102) ayant un diamètre diminuant progressivement les uns par rapport aux autres et fournis ensemble de façon monolithique avec une tige (3, 103); lesdits éléments discoïdes comprenant au moins un premier élément de base (21, 121) ayant un diamètre plus grand, et un élément d'extrémité (22, 122) ayant un diamètre plus petit; ledit élément d'extrémité (22, 122) ayant une zone concave sensiblement en forme de tronc (25) constituée par une zone sensiblement circulaire plate (5) reliée à une paroi inclinée (6); ledit dispositif **se caractérisant en ce que** ledit élément d'extrémité (22, 122) a un moyen de pré-fracturation constitué par au moins un creux (26) ayant une section transversale sensiblement triangulaire, lequel est formé du côté intérieur dudit élément d'extrémité (22, 122); ledit creux (26) étant formé dans ladite zone sensiblement circulaire plate (5) dans une position centrale.

2. Dispositif selon la revendication 1, **caractérisé en ce que** ledit moyen de pré-fracturation comprend une entaille annulaire (61) formée dans la partie intérieure de ladite paroi inclinée (6).

3. Dispositif selon la revendication 1, **caractérisé en ce qu'**il comprend un élément annulaire (130) formé par un matériau sensiblement rigide intégré dans ledit premier élément de base (121).

4. Dispositif selon la revendication 1, **caractérisé en ce qu'**il comprend un ou plusieurs élément(s) intermédiaire(s) (23, 24, 123, 124) disposés entre ledit premier élément de base (21, 121) et ledit élément d'extrémité (22, 122).

5. Dispositif selon l'une ou plusieurs des revendications précédentes, **caractérisé en ce qu'**à l'intérieur du dispositif, au niveau de l'élément d'extrémité (22, 122) et au niveau d'un ou plusieurs éléments intermédiaires (23, 24, 123, 124), il y a des rabats annulaires (27, 28) adaptés pour contenir des câbles et tuyaux de diamètres différents.

6. Dispositif selon l'une ou plusieurs des revendications précédentes, **caractérisé en ce que** ladite tige (3, 103) a un creux annulaire (29, 129) adjacent audit élément de base (21, 121) et est adaptée pour se mettre en prise avec le bord du trou de la structure à laquelle le dispositif est appliqué; ledit creux annulaire (29, 129) de ladite tige (3, 103) ayant un diamètre d'accouplement qui est augmenté de 0,2-0,3 mm par rapport au trou de la structure à laquelle ledit dispositif est appliqué.
